(19) Europäisches Patentamt

European Patent Office

Office européen des brevets

(11) EP 1 053 980 A1

## (12) EUROPEAN PATENT APPLICATION

(43) Date of publication:
22.11.2000 Bulletin 2000/47

(51) Int Cl.$^7$: C03C 17/34

(21) Application number: 00401123.5

(22) Date of filing: 21.04.2000

(84) Designated Contracting States:
AT BE CH CY DE DK ES FI FR GB GR IE IT LI LU MC NL PT SE
Designated Extension States:
AL LT LV MK RO SI

(30) Priority: 22.04.1999 JP 11476099
08.11.1999 JP 31665699

(71) Applicant: Nippon Sheet Glass Co., Ltd.
Osaka-shi, Osaka 541-0045 (JP)

(72) Inventor: Norimatsu, Hodaka
c/o Nippon Sheet Glass Co., Ltd.
Osaka-shi, Osaka, 541-0045 (JP)

(74) Representative: Uchida, Kenji et al
S.A. Fedit-Loriot et Autres Conseils en Propriété Industrielle,
38, avenue Hoche
75008 Paris (FR)

(54) **Low emissivity glass, glass articles made of low emissivity glass, and method of manufacturing low emissivity glass**

(57) A low emissivity (low-E) glass, glass articles made of the low-E glass, and method of manufacturing the low-E glass are provided. The low-E glass has excellent transparency and heat insulating property, and can have various reflection color tones, to thereby realize an excellent design with an improved appearance. A low emissivity film and an intermediate layer for suppressing a change of an interference color caused by a change of film thickness of the low emissivity film are laminated on a surface of a glass substrate. The reflection color tone of at least one of the two opposite major surfaces of the low-E glass is set such that the psychometric chroma coordinates a* and b* of the L*a*b* color system are within a range of $25 \leq a^{*2}+b^{*2} \leq 900$, to thereby provide a desired chromatic color tone.

**Description**

BACKGROUND OF THE INVENTION

Field of the Invention

The present invention relates to a low emissivity glass (low-E glass) and glass articles made of the low emissivity glass, and more particularly, to a low emissivity glass for use as window glasses for buildings, which has excellent transparency and heat insulating property, and can have various reflection color tones, glass articles made of the low emissivity glass, such as double glazing, and a method of manufacturing a low emissivity glass, which can adjust the reflection color tone of the glass to desired chromatic color tones and can impart excellent transparency and heat insulating property to the glass.

Prior Art

Due to energy saving requirements in recent years, a low-E glass having a glass substrate with a low emissivity film formed on a surface thereof to enhance the heat insulating property and double glazing made of the low-E glass are widely used for window glasses for buildings in cold regions so as to reduce the heating load in winter.

A low-E glass of this kind is manufactured using a tin oxide based film comprising a tin oxide doped with fluorine (hereinafter referred to as "$SnO_2$:F film") as a low emissivity film material, such that the $SnO_2$:F film is formed on a surface of the glass substrate by a chemical vapor deposition method (hereinafter referred to as "the CVD method").

In recent years, there is a demand on the market for a window glass which can have various chromatic color tones as well as reduced color unevenness to thereby provide the possibility of a more creative design or a wider variety of designs with an improved appearance, without spoiling other fundamental properties required of a glass plate such as transparency and heat insulating property.

However, in the above-mentioned conventional low-E glass, if the reflection color tone of the $SnO_2$:F film is controlled by utilizing the interference color of the $SnO_2$:F film, the amount of change of the reflection color tone becomes excessively large compared to the amount of film thickness change of the $SnO_2$:F film. As a result, when a glass substrate with an increased surface area is used, the color unevenness over the glass surface becomes conspicuous, leading to a degraded appearance and thus causing discomfort to people.

To overcome this disadvantage, there has been proposed a glass structure which has an intermediate layer formed of two layers interposed between the glass substrate and the low emissivity film (e.g. Japanese Patent Publication (Kokoku) No. 3-72586).

According to the prior art, the $SnO_2$:F film having a thickness of 0.1 - 1.0 $\mu$m is formed as the low emissivity film on a surface of the glass substrate to improve the heat insulating property, while the thickness of the intermediate layer is set to a predetermined value depending on the film material and the refractive index of the glass substrate to decrease or eliminate the so-called visible iridescence and hence suppress the interference color itself.

However, although the above prior art permits controlling the reflection color tone to a neutral color tone by decreasing or eliminating the visible iridescence, there remains a problem that it is unable to obtain a window glass having a reflection color tone of a chromatic color that meets the needs of today's market.

SUMMARY OF THE INVENTION

It is therefore a first object of the present invention to provide a low-E glass and glass articles made of the low-E glass, which can have various chromatic color tones as well as reduced color unevenness to thereby present an excellent design, i.e. a more creative design or a wider variety of designs, with an improved appearance, without spoiling other fundamental properties required of the glass such as transparency and heat insulating property.

It is a second object of the present invention to provide a method of manufacturing a low-E glass, which can have desired color tones as well as reduced color unevenness so that the glass can present an excellent design with an improved appearance, without spoiling other fundamental properties required of the glass such as transparency and heat insulating property.

To attain the first object, the present invention provides a low emissivity glass comprising:

　　a glass substrate having a surface;
　　at least one low emissivity film formed on the surface of the glass substrate; and
　　at least one intermediate layer interposed between the glass substrate and the low emissivity film, for suppressing a change of an interference color caused by a change of film thickness of the low emissivity film;
　　wherein the low emissivity glass has a visible light transmittance of 70 % or more, and the low emissivity glass has two opposite major surfaces and has a reflection color tone as viewed from at least one surface of the two opposite major surfaces set such that psychometric chroma coordinates a* and b* of the L*a*b* color system are within a range of $25 \leqq a^{*2} + b^{*2} \leqq 900$.

As a result, the low emissivity glass according to the present invention can have various chromatic color tones as well as reduced color unevenness to thereby present an excellent design, with an improved appearance, without spoiling other fundamental properties required of the glass such as transparency and heat insulating property.

In a preferred form of the present invention, the intermediate layer comprises a tin oxide based film comprising a tin oxide, and a silicon oxide based film comprising a silicon oxide formed on a surface of the tin oxide based film.

In another preferred form of the present invention, the intermediate layer has a refractive index $n_1$ which satisfies a relationship of $n_g < n_1 < n_2$ at a wavelength of 550nm, where $n_g$ is a refractive index of the glass substrate, and $n_2$ is a refractive index of the low emissivity film.

Preferably, the low emissivity film is a tin oxide based film comprising a tin oxide doped with fluorine.

Doping the tin oxide with fluorine enhances the electric conductivity of the film, and further, light in the infrared light wavelength range is effectively reflected, thereby improving the heat insulating property. In addition, in view of productivity and durability, it is most preferable to use a tin oxide based film doped with fluorine ($SnO_2$:F film) as the low emissivity film

Preferably, the low emissivity glass has a reflection color tone set such that the psychometric chroma coordinates a* and b* satisfy a relationship of $-a^* \geqq b^*$ and $a^* \leqq b \leqq$.

Alternatively, the reflection color tone is set such that the psychometric chroma coordinates a* and b* satisfy a relationship of $a^* \geqq b^*$ and $-a^* \geqq b^*$.

When the reflection color tone is such that the psychometric chroma coordinates a* and b* satisfy the relationship of $-a^* \geqq b^*$ and $a^* \leqq b^*$ or $a^* \geqq b^*$ and $-a^* \geqq b^*$, the reflection color tone shows a green or blue color, respectively. Therefore, the low emissivity glass of the present invention can provide colors which are especially favored in today's market.

In a further preferred form of the present invention, the reflection color tone as viewed from one surface of the two opposite major surfaces is set such that the psychometric chroma coordinates a* and b* are within a range of $25 \leqq a^{*2} + b^{*2} \leqq 900$ and the reflection color tone as viewed from another surface of the two opposite major surfaces is set such that the psychometric chroma coordinates a* and b* satisfy a relationship of $25 > a^{*2} + b^{*2}$.

Preferably, the intermediate layer comprises at least one tin oxide based film comprising a tin oxide doped with antimony.

By providing the intermediate layer containing a SnSbOx film, the present invention is able to provide a low emissivity glass which has a reflection color tone of a chromatic color when viewed from one side surface thereof, thus providing an excellent design while presenting a reflection color tone of a neutral color when viewed from the opposite side surface thereof.

Further, the present invention provides a glass article comprising:

> a plurality of glass plates including at least one glass plate of a low emissivity glass as mentioned above, the glass plates being disposed in opposed relation to each other with a hollow layer defined therebetween; and
>
> wherein the glass article has a reflection color tone as viewed from outside a room set such that the psychometric chroma coordinates a* and b* of the L*a*b* color system are within a range of $25 \leqq a^{*2} + b^{*2} \leqq 900$.

Generally, it is known that a double glazing unit of this kind, in which a hollow layer filled with air, an inert gas or reduced pressure is defined between a plurality of glass plates, has an outstanding heat insulating property. By employing the low emissivity glass according to the present invention in a double glazing unit, the heat insulating property is further enhanced, while providing a glass article with an excellent design and an improved appearance which can have reflection color tones of various chromatic colors.

To attain the second object, the present invention provides a method of manufacturing a low emissivity glass comprising the steps of;

> preparing a glass substrate having a surface;
> forming at least one low emissivity film on the surface of the glass substrate; and
> interposing at least one intermediate layer between the glass substrate and the low emissivity film;
> wherein the low emissivity glass has a visible light transmittance of 70 % or more, and the low emissivity glass has two opposite major surfaces and has a reflection color tone as viewed from at least one surface of the two opposite major surfaces set such that psychometric chroma coordinates a* and b* of the L*a*b* color system are within a range of $25 \leqq a^{*2} + b^{*2} \leqq 900$.

The above and other objects, features, and advantages of the invention will be more apparent from the following detailed description taken in conjunction with the accompanying drawings.

BRIEF DESCRIPTION OF THE DRAWINGS

FIG. 1 is a schematic cross-sectional view of the structure of a low-E glass according to a first embodiment of the present invention;

FIG. 2 is a schematic cross-sectional view of the structure of a low-E glass according to a second embodiment of the present invention;

FIG. 3 is a schematic cross-sectional view of the structure of a low-E glass according to a third embodiment of the present invention;

FIG. 4 is a schematic view of a typical configuration of a on-line CVD apparatus;

FIG. 5 is a cross-sectional view of an essential part of a double glazing unit as a glass article according to an embodiment of the present invention; and

FIG. 6 is a cross-sectional view of an essential part of a double glazing unit as a glass article according to another embodiment of the present invention.

DETAILED DESCRIPTION

The colors of window glasses and the like can be expressed quantitatively on a chromaticity diagram in terms of psychometric chroma coordinates a* and b* of the L*a*b* color system provided by the International Commission on Illumination (CIE), and a method of calculating the chromaticity coordinates is also provided by JIS Z8729-1994. It is known that when the psychometric chroma coordinates a* and b* are within a range of $25 \leq a^{*2} + b^{*2} \leq 900$, the glass can show various color tones including light green, blue, red, and yellow. Therefore, in order to obtain low-E glasses having various reflection color tones, it is necessary for the psychometric chroma coordinates a* and b* to fall within the range of $25 \leq a^{*2} + b^{*2} \leq 900$.

On the other hand, if the reflection color tone is adjusted solely by changing the film thickness of the low emissivity film formed on the glass substrate, as previously stated with respect to the prior art, the change of the interference color becomes excessively large compared to the change of the film thickness, and unevenness in color becomes easy to occur. Therefore, it is not possible to obtain a high quality low-E glass having an excellent design with an improved appearance by solely adjusting the film thickness of the low emissivity film.

Therefore, the present inventors conducted extensive studies to obtain a low-E glass which can have various chromatic color tones as well as reduced color unevenness to thereby provide the possibility of a more creative design or a wider variety of designs with an improved appearance, without spoiling other fundamental properties required of a window glass such as transparency and heat insulating property. As a result, the inventors reached a finding that if at least one intermediate layer having a predetermined composition is interposed between the low emissivity film and the glass substrate, a change of the interference color caused by a change of the film thickness of the low emissivity film can be suppressed, thereby reducing the color unevenness, thus making it possible to obtain a high quality low-E glass which can show a reflection color tone of a desired chromatic color.

The present invention is based upon the above finding.

The present invention will now be described in detail with reference to the drawings showing embodiments thereof.

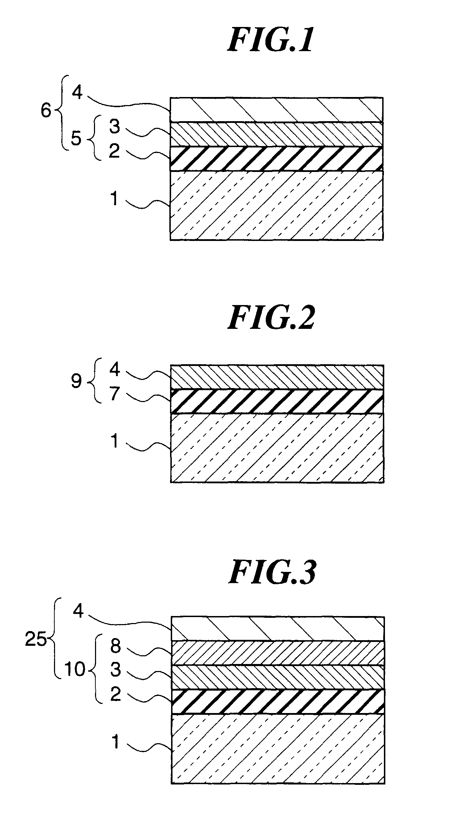

FIG. 1 is a cross-sectional view schematically showing the structure of a low-E glass according to a first embodiment of the invention.

In FIG. 1, reference numeral 1 designates a glass substrate, which is formed of a heat absorbing glass or wire glass such as soda-lime silicate glass or soda-lime silicate glass containing a slight amount of a coloring ingredient. A $SnO_2$ film 2 is formed on a surface of the glass substrate 1, a $SiO_2$ film 3 is formed on a surface of the $SnO_2$ film 2, and a $SnO_2$: F film 4 as the low emissivity film is formed on a surface of the $SiO_2$ film 3. The $SnO_2$ film 2 and $SiO_2$ film 3 collectively form an intermediate layer 5, and the intermediate layer 5 and the $SnO_2$:F film 4 collectively form a stacked layer 6.

To obtain a low-E glass which meets the needs of today's market, it is necessary that the above-mentioned psychometric chroma coordinates a* and b* of the L*a*b* color system should be within the range of the following equation (1):

$$25 \leqq a^{*2} + b^{*2} \leqq 900 \qquad\qquad (1)$$

That is, when the psychometric chroma coordinates a* and b* satisfy the relationship of $25 > a^{*2} + b^{*2}$, the reflection color tone becomes a neutral color tone and cannot be adjusted to various chromatic color tones. Such glass does not meet the needs of today's market which favors window glasses for buildings showing reflection color tones of light chromatic colors, especially green and blue. On the other hand, when the psychometric chroma coordinates a* and b* satisfy the relationship of $a^{*2} + b^{*2} > 900$, the reflection color tone shows a chromatic color tone but the "darkness" of the color becomes apparent and thus becomes unsuitable for what is needed on the market. For this reason, it is required that the equation (1) be satisfied in order to adjust the reflection color tone to various chromatic color tones.

Further, in the present embodiment, the film thickness of each of the component films of the stacked layer 6 ($SnO_2$ film 2, $SiO_2$ film 3 and $SnO_2$: F film 4) is set such that the following conditions are satisfied: 1) the psychometric chroma coordinates a* and b* of the reflection color tone satisfy the equation (1); 2) the color unevenness is reduced; 3) required transparency is secured; and 4) required heat insulating property as a low-E glass is secured. Specifically, the thickness of each film is limited as follows: $SnO_2$ film 2 and $SiO_2$ film 3: 10nm to 100nm; and $SnO_2$:F film 4: 200nm to 500nm.

The reasons for limiting the thickness of each film as above will be explained below.

(1) $SnO_2$ film 2 and $SiO_2$ film 3

The $SnO_2$ film 2 and $SiO_2$ film 3 form the intermediate layer 5 which has the effect of reducing the color unevenness by suppressing the interference color change caused by the change of film thickness of the low emissivity film, $SnO_2$:F film 4. However, if the thickness of each of the $SnO_2$ film 2 and $SiO_2$ film 3 is less than 10nm, the film is too thin and an even formation of film becomes difficult to achieve in terms of production technology, and thus the color unevenness cannot be effectively reduced. On the other hand, if the thickness of each film is more than 100nm, it becomes difficult to adjust the reflection color tone. Therefore, in the present embodiment, the thickness of the $SnO_2$ film 2 and $SiO_2$ film 3 has been set to the range of 10nm to 100nm.

(2) $SnO_2$:F film 4

The $SnO_2$:F film 4 is formed by doping a tin oxide with fluorine. By doping a tin oxide with fluorine, the resulting film has enhanced electric conductivity, thereby effectively reflecting light in the infrared light wavelength range (5.5 μm to 50 μm) and improving heat insulating property. The heat insulating property is generally evaluated by a vertical radiation ratio (JIS R3106-1998), which should be 2.0 or less to provide a desired heat insulating property suitable even for cold regions. If the film thickness of the $SnO_2$:F film 4 is less than 200nm, the vertical radiation ratio becomes larger than 2.0 and sufficient heat insulating property cannot be achieved. On the other hand, while it is possible to adjust the reflection color tone by adjusting the thickness of the $SnO_2$:F film 4 as well as the thickness of the intermediate layer 5 ($SnO_2$ film 2 and $SiO_2$ film 3), if the thickness of the $SnO_2$:F film 4 exceeds 500nm, the color tone adjustment becomes difficult to perform. In addition, the film becomes excessively thick, lowering the visible light transmittance and spoiling the transparency, and thereby causing discomfort to people in the room as well as unnecessarily increasing the manufacturing cost. Therefore, in the present embodiment, the thickness of the $SnO_2$:F film 4 has been limited to 200nm to 500nm.

By limiting the thickness of each film of the stacked layer 6 as above, it is possible to obtain a low-E glass having a desired reflection color tone of a chromatic color while securing required transparency and heat insulating property as well as reduced color unevenness, to thereby present an excellent design with an improved appearance. Further, the $SnO_2$:F film 4 used as the low emissivity film has improved electric conductivity and hence can effectively reflect infrared light waves, to thereby provide an low-E glass well suited for use in cold regions where the heat insulating property is valued.

Specifically, by setting the thickness of each of the film $SnO_2$ film 2, $SiO_2$ film 3, and $SnO_2$:F film 4 to below-mentioned values, it is possible to obtain a low-E glass having a desired reflection color tone.

For instance, to obtain a reflection color tone of a green color, ($25 \leqq a^{*2} + b^{*2} \leqq 900$, $-a^* \geqq b^*$, $a^* \leqq b^*$), it is preferable to limit the thickness of the films to the following ranges: $SnO_2$ film 2: 10nm to 100nm; $SiO_2$ film 3: 10nm to 50nm; and $SnO_2$:F film 4: 300nm to 500nm.

To obtain a reflection color tone of a blue color ($25 \leqq a^{*2} + b^{*2} \leqq 900$, $a^* \geqq b^*$, $-a^* \geqq b^*$), it is preferable to limit the thickness of the films to the following ranges: $SnO_2$ film 2: 10nm to 100nm; $SiO_2$ film 3: 10nm to 100nm; and $SnO_2$:F film 4: 250nm to 450nm.

Further, to obtain a reflection color tone of a yellow color ($25 \leqq a^{*2} + b^{*2} \leqq 900$, $a^* \leqq b^*$, $-a^* \leqq b^*$), it is preferable to limit the thickness of the films to the following ranges: $SnO_2$ film 2: 10nm to 50nm; $SiO_2$ film 3: 10nm to 50nm; and $SnO_2$:F film 4: 200nm to 400nm.

Still further, to obtain a reflection color tone of a red color ($25 \leqq a^{*2} + b^{*2} \leqq 900$, $a^* \geqq b^*$, $a^* \geqq -b^*$), it is preferable to limit the thickness of the films to the following ranges: $SnO_2$ film 2: 10nm to 90nm; $SiO_2$ film 3: 10nm to 90nm; and $SnO_2$:F film 4: 320nm to 430nm.

In this manner, by appropriately adjusting the film thickness of each of the component films of the stacked layer, it is possible to provide a low-E glass having a reflection color tone of green or blue which are especially favored in today's market, and thereby meet the market demand.

In the present embodiment, the fluorine content in the $SnO_2$:F film 4 is set to 0.01 to 1 wt %. As described above, the $SnO_2$:F film 4 contributes to the improvement of the heat insulating property by enhancing electric conductivity. However, if the fluorine content in the $SnO_2$ film 4 is less than 0.01 wt %, the heat insulating property cannot be achieved to a desired extent, whereas, if the fluorine content exceeds 1 wt %, the visible light transmittance is lowered and the glass looses its transparency, causing discomfort to people in the room and a comfortable living condition cannot be achieved. Therefore, in the present embodiment, the fluorine content in the $SnO_2$:F film 4 has been limited to 0.01 to 1 wt %, and more preferably, to 0.1 to 0.6 wt %.

Next, a description will be given of raw materials which are used to form the stacked layer 6.

There are various methods to form the stacked layer 6 on the glass substrate 1, such as vacuum deposition, sputtering, and painting. However, in view of productivity and durability (resistance to stripping) of the film, the CVD method which induces a chemical reaction in a gaseous compound on the glass substrate so that depositions from the chemical reaction form a film on the glass substrate, or a spraying method such as solution spraying, dispersion spraying, and powder spraying are preferred.

As a tin raw material used to deposit the $SnO_2$ film 2 by the CVD method, it is possible to use tin compounds such as monobutyltin trichloride, tin tetrachloride, dimethyltin dichloride, dibutyltin dichloride, dioctyltin dichloride, tetramethyltin, tetrabutyltin, and tetraoctyltin. Further, as an oxidizing material, oxygen, water vapor, dry air and others may be used.

As a tin raw material used to deposit the $SnO_2$ film 2 by the spraying method, it is possible to use monobutyltin trichloride, tin tetrachloride, dimethyltin dichloride, dibutyltin dichloride, dioctyltin dichloride, tetraoctyltin, dibutyltin oxide, dibutyltin dilaurate, monobutyltin fatty acid, dibutyltin fatty acid, dibutyltin diacetate, dioctyltin diacetate, octyltin dilaurate, and the like.

Further, silicon raw materials which may be used to deposit the $SiO_2$ film 3 by the CVD method include silane based compounds such as monosilane, disilane, trisilane, monochlorosilane, dichlorosilane, 1,2-dimethylsilane, 1,1,2-trimethyldisilane, and 1,1,2,2-tetramethyldisilane, and further, tetramethylorthosilicate, tetraethylorthosilicate, and the like. As an oxidizing material, oxygen, water vapor, dry air, carbon dioxide, carbon monoxide, nitrogen dioxide, and ozone may be used.

When a silane base compound is used as the silicon raw material, it is preferable to add an appropriate amount of unsaturated hydrocarbon such as ethylene, acetylene, and toluene, so as to suppress reaction of the silane base compound before it reaches the surface of the glass substrate 1, as well as to control the refractive index of the the $SiO_2$ film 3.

Further, when tetramethylorthosilicate, tetraethylorthosilicate and the like are used as the silicon raw material, it is preferable to add a substance such as aluminum iso-propoxide in order to accelerate the forming speed of the film.

Still further, substances such as tetramethylorthosilicate and tetraethylorthosilicate may be used as the silicon raw material to deposit the $SiO_2$ film 3 by the spraying method, in which case it is preferable to add a substance such as zirconium acetylacetonate in order to accelerate the forming speed of the film.

Further, as the fluorine compound to deposit the $SnO_2$:F film 4 by the CVD method, it is possible to use hydrogen fluoride, trifluoroacetic acid, bromotrifluoromethane, chlorodifluoromethane and difluoroethane, and as the fluorine compound to deposit the $SnO_2$:F film 4 by the spraying method, it is possible to use ammonium fluoride and the like.

Further, from a point of view of improvement of color tone and optical characteristics and improvement of the durability of the film, it is preferable to add at least one metal selected from the group consisting of manganese, vanadium, bismuth, cobalt, iron, chromium, nickel, copper, antimony, titanium, zirconium, zinc, aluminum, and indium, or a metallic salt thereof, to the $SnO_2$ film 2, $SiO_2$ film 3, or $SnO_2$:F film 4. A halogen element such as chlorine and bromine may be further added to at least one of the films.

FIG. 2 is a cross-sectional view schematically showing the structure of a low-E glass according to a second embodiment of the present invention. In the second embodiment, an intermediate layer 7 having a refractive index of $n_1$ is interposed between the glass substrate 1 having a refractive index of $n_g$ and the $SnO_2$:F film 4 having a refractive index of $n_2$. The intermediate layer 7 and the $SnO_2$:F film 4 constitute a stacked layer 9.

The thickness of the intermediate layer 7 is set to 10nm to 100nm for the same reasons as the intermediate layer 5 in the first embodiment. That is, if the thickness of the intermediate layer 7 is less than 10nm, the film formation is prone to unevenness in terms of production technology, whereas, if the thickness exceeds 100nm, it becomes difficult to adjust the reflection color tone. Therefore, in the second embodiment, the the thickness of the intermediate layer 7 has also been limited to 10nm to 100nm.

The refractive index $n_1$ of the intermediate layer 7 satisfies the relationship with the refractive indices $n_g$ and $n_2$ of the glass substrate 1 and the $SnO_2$:F film 4 expressed by the following equation (2), at a wavelength of 550nm at which human visibility is considered to be the largest:

$$n_g < n_1 < n_2 \qquad\qquad (2)$$

That is, the intermediate layer 7 in the second embodiment is formed of a film material selected from film materials which have refractive index values $n_1$ satisfying the equation (2), in order to obtain a low-E glass having a desired reflection color tone as well as having a suppressed amount of change of interference color and hence reduced color unevenness.

To form the intermediate layer 7 having such properties, in terms of cost, productivity and others, it is preferable to use an alloy compound containing $SiO_2$ and $SnO_2$, which satisfies a general equation of $Si_xSn_yO_z$ ($0<x<1$, $0<y<1$, $0<z\leqq2$, $x+y\leqq1$), or an alloy compound containing SiC and $SiO_2$, which satisfies a general equation of $SiC_xO_y$ ($0<x<1$, $0<y<2$, $2x+y\leqq2$).

To form a $Si_xSn_yO_z$ film, at least one material is selected from each of the silicon raw materials, tin raw materials, and oxidizing materials stated above as applicable to the first embodiment, the selected materials are blended in appropriate amounts and mixed to prepare a film depositing material, and then the film can easily be formed on the glass substrate 1 from the prepared film depositing material by either the CVD method or the spraying method.

To form a $SiC_xO_y$ film, at least one material is selected from each of the silicon raw materials and the oxidizing materials stated above as applicable to the first embodiment, an appropriate amount of unsaturated hydrocarbon such as ethylene, acetylene, and toluene is added to the selected materials to prepare a film depositing material, and then the film is easily formed on the glass substrate 1 from the prepared film depositing material by either the CVD method or the spraying method.

Also in the second embodiment, for the same reasons as in the first embodiment, the thickness of the $SnO_2$:F film 4 is set to 200nm to 500nm and the fluorine content in the $SnO_2$:F film 4 is set to 0.01 wt% to 1 wt% (more preferably, to 0.1 wt% to 0.6 wt%), thereby facilitating the color tone adjustment as well as securing heat insulating property and transparency required of a low-E glass.

Also in the second embodiment, from a point of view of improvement of color tone and optical characteristics and improvement of the durability of the film, it is preferable to add at least one metal selected from the group consisting of manganese, vanadium, bismuth, cobalt, iron, chromium, nickel, copper, antimony, titanium, zirconium, zinc, aluminum, and indium, or a metallic salt thereof, to the $SnO_2$ film 2, $SiO_2$ film 3, or $SnO_2$:F film 4. In addition, a halogen element such as chlorine and bromine may be added to at least one of the films.

In the second embodiment, similarly to the first embodiment, it is possible to obtain a low-E glass which can have a desired chromatic color tone while securing required transparency and heat insulating property, as well as having reduced color unevenness, thereby improving the appearance of the glass and hence the design.

FIG. 3 is a cross-sectional view schematically showing the structure of a low-E glass according to a third embodiment of the present invention. The low-E glass of the third embodiment presents a reflection color tone of a chromatic color when viewed from one side surface thereof and presents a reflection color tone of a neutral color when viewed from the opposite side surface. That is, for example, if the reflection color tone as viewed from a side surface on which the film is formed (hereinafter referred to as the "film coated surface") shows a neutral color tone, then the reflection color tone as viewed from the opposite side surface, i.e. the non-film-coated surface, shows a chromatic color tone. On the other hand, if the reflection color tone as viewed from the non-film-coated surface shows a neutral color tone, then the reflection color tone as viewed from the film coated surface shows a chromatic color tone.

Specifically, the third embodiment is configured in a similar manner to that of the first embodiment, in which the $SnO_2$ film 2 is formed on a surface of the glass substrate 1, the $SiO_2$ film 3 is formed on a surface of the $SnO_2$ film 2, a SnSbOx film 8 is formed on a surface of the $SiO_2$ film 3, and the $SnO_2$:F film 4 is formed on a surface of the SnSbOx film 8. The $SnO_2$ film 2, SiO2 film 3, and SnSbOx film 8 constitute an intermediate layer 10, while the intermediate layer 10 and the $SnO_2$:F film 4 constitute a stacked layer 25.

Further, as previously stated, in order to obtain a reflection color tone of a chromatic color, it is necessary that the psychometric chroma coordinates a* and b* satisfy the equation (1), $25\leqq a^{*2} + b^{*2} \leqq900$, and further, it is known that the following equation (3) needs to be satisfied so as for the reflection color tone to show a neutral color tone:

$$25 > a^{*2} + b^{*2} \tag{3}$$

Therefore, in the third embodiment, the thickness of the SnSbOx film 8 is set to 10 nm to 250nm, and the mole ratio of antimony to tin (Sb/Sn) is set to 0.01 to 0.2 so that the psychometric chroma coordinates a* and b* of the reflection color tone as viewed from one side surface satisfy the equation (1), while the psychometric chroma coordinates a* and b* of the reflection color tone as viewed from the opposite side surface satisfy the equation (3).

If the thickness of the SnSbOx film 8 is less than 10nm, the film is too thin and becomes difficult to form evenly in terms of production technology, whereas, if the thickness exceeds 250nm, the color tone adjustment when the low emissivity film is stacked becomes difficult and transparency is lost, thus causing discomfort to people in the room as well as unnecessarily increasing the manufacturing cost. Therefore, the thickness of the SnSbOx film 8 has been limited to 10nm to 250nm.

Further, if the Sb/Sn mole ratio is less than 0.01, it becomes difficult for two opposite major surfaces of the low-E glass to have different reflection color tones from each other, whereas, if the Sb/Sn mole ratio exceeds 0.2, the visible light transmittance is lowered and the glass looses its transparency. Therefore, the Sb/Sn mole ratio in the third embodiment has been limited to 0.01 to 0.2.

As an antimony raw material to form the SnSbOx film 8, it is possible to use antimony trichloride and antimony pentachloride.

The thickness of the film 2 and film 3 is set to 10nm to 100nm for the same reasons as in the first embodiment. That is, if the thickness of the film 2 and film 3 is less than 10nm, the film formation is prone to losing its evenness in terms of production technology, whereas, if the thickness exceeds 100nm, it becomes difficult to adjust the reflection color tone. Therefore, in the third embodiment, the the thickness of the film 2 and film 3 has been limited to 10nm to 100nm, as in the first embodiment.

Further, the thickness of the $SnO_2$:F film 4 is set to 200nm to 500nm as in the first embodiment, and the fluorine content in the $SnO_2$:F film 4 is set to 0.01 wt% to 0.1 wt% (more preferably, to 0.1 wt% to 0.6 wt%) as in the first embodiment, thereby facilitating the color tone adjustment as well as securing heat insulating property and transparency required of a low-E glass.

Also in the third embodiment, from a point of view of improvement of color tone and optical characteristics and improvement of the durability of the film, it is preferable to add at least one metal selected from the group consisting of manganese, vanadium, bismuth, cobalt, iron, chromium, nickel, copper, antimony, titanium, zirconium, zinc, aluminum, and indium, or a metallic salt thereof, to the $SnO_2$ film 2, $SiO_2$ film 3, $SnO_2$:F film 4, or SnSbOx film 8. In addition, a halogen element such as chlorine and bromine may be added to at least one of the films.

Thus, according to the third embodiment, the SnSbOx film is included as one of films forming the intermediate layer. As a result, it is possible to provide a low-E glass which has a reflection color tone of a chromatic color as viewed from one side surface, and a reflection color tone of a neutral color tone as viewed from the opposite side surface, to thereby achieve a further improved design on one hand, and achieve a natural reflection color tone on the other hand while reducing the color unevenness and securing higher transparency.

The low-E glass according to the present invention has been described above by referring to the first to third embodiments. However, the low-E glass according to the present invention is not limited to these embodiments. In the embodiments, the $SnO_2$: F film 4 is used as the low emissivity film, however, other low emissivity films having transparency may be used, or alternatively, other low emissivity films having transparency may be used in combination with the $SnO_2$: F film 4 to form a multi-layered low emissivity film.

A method of manufacturing the low-E glass according to the present invention will now be described in detail.

To form the stacked layers of the first to third embodiments on a glass substrate to manufacture a low-E glass, it is possible to use the aforementioned methods such as vacuum deposition, sputtering, and painting. However, in terms of productivity and durability, the CVD method or the spraying method is preferred.

However, for improved film qualities and enhanced productivity, it is most preferable to manufacture a ribbon-like glass (ribbon glass) as a glass substrate by a so-called float glass process. Then, the ribbon glass is subjected to an on-line CVD method such that pyrolysis CVD is carried out utilizing the heat energy of the glass ribbon, so that films are deposited on the glass ribbon.

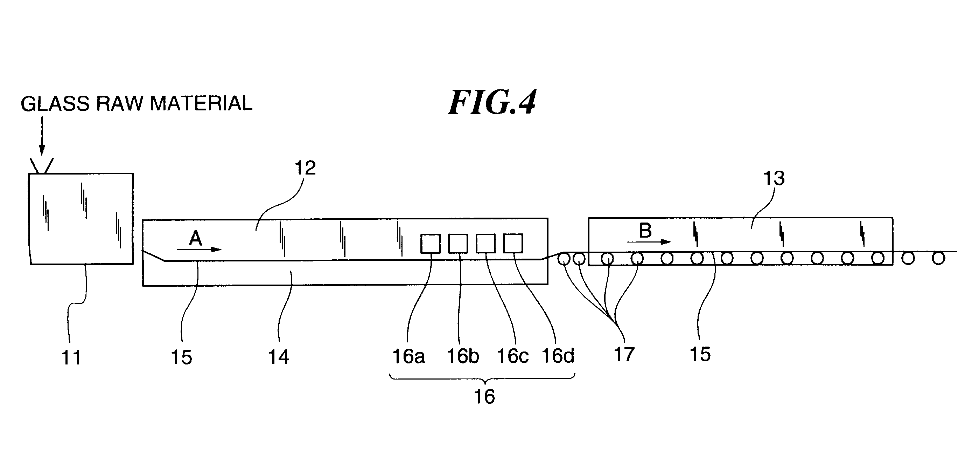

FIG. 4 is a schematic view showing the configuration of an on-line CVD apparatus. The on-line CVD apparatus is comprised of a melting furnace 11, into which a glass raw material is charged and melted in a high temperature atmosphere, a bath 12, into which the resulting molten glass is poured, and a lehr 13 in which a glass ribbon 15 drawn from the bath 12 is slowly cooled. The bath 12 contains a predetermined amount of molten tin 14, and is provided with a film-forming raw material supply part 16 comprised of first to fourth film-forming raw material supply ports 16a to 16d at a downstream portion thereof. The film-forming raw material supply part 16 is disposed in such a manner that the ports 16a to 16e each cover the width of the glass ribbon 15. The number of the film-forming raw material supply ports may be changed depending on the number of layers or the thickness of the films to be deposited on the glass ribbon.

In the on-line CVD apparatus constructed as above, when a predetermined glass raw material powder is charged into the melting furnace 11 heated to 1500 to 1600°C, the glass raw material powder melts in the melting furnace 11 into a molten glass which pours into the bath 12 containing the molten tin 14. Since the specific gravity of the molten glass is smaller than that of the molten tin 14, the molten glass floats on top of the molten tin 14 and moves in a direction as indicated by an arrow A, into a ribbon-like shape as the glass ribbon 15. Then, the glass ribbon 15 is conveyed downstream to the film-forming raw material supply part 16 while being maintained at a high temperature (for example, between 600 and 750°C).

Then, predetermined film-forming raw materials are supplied through the film-forming raw material part 16 onto the surface of the glass ribbon 15. Pyrolysis of the film-forming raw materials occurs on the glass ribbon 15 due to the heat energy of the glass ribbon 15, and thus desired thin films are deposited on the glass ribbon 15. For example, to prepare the stacked layer 6 as shown in FIG. 1, a mixture gas of a tin compound, oxygen, water steam and nitrogen is supplied from the first film-forming raw material supply port 16a onto the surface of the ribbon glass 15 to deposit the $SnO_2$ film 2 as a first layer. Then, a silicon compound, oxygen, nitrogen and, if required, unsaturated hydrocarbon such as ethylene are supplied from the second film-forming raw material supply port 16b onto the $SnO_2$ film 2 to deposit the $SiO_2$ film 3 as a second layer. Next, a mixture gas of a tin compound, oxygen, water steam, nitrogen, and a fluorine compound is supplied from the third film-forming raw material supply port 16c onto the surface of the $SiO_2$ film 3 to deposit the $SnO_2$:F film 4 as a third layer. When stacking a film having a large thickness, the same film-forming raw material is divided into a plurality of batches (for example, through film-forming raw material supply ports 16c and 16d used to form third and fourth layers) and supplied onto the surface of glass ribbon 15.

The glass ribbon 15 thus having films formed as above is pulled into the lehr 13 by a plurality of rollers 17, conveyed in a direction indicated by an arrow B, and sequentially discharged from the lehr 13.

Since the formation of films according to the on-line CVD method described above is carried out by the pyrolysis utilizing the heat energy of the glass ribbon 15, it is possible to deposit films on the glass surface heated to a temperature above its softening point, leading to an improvement in properties of the films, increased film-forming reaction speed and enhanced film-forming reaction efficiency. Further, productivity is also improved, such that an efficient mass production of low-E glass can be realized.

As other manufacturing methods, the above-mentioned CVD method or spraying method is preferred.

The stacked layer can be deposited by the CVD method in such a manner that a material for the glass substrate 1 is cut into a desired shape, the resulting glass substrate 1 is heated to a predetermined high temperature, and the heated glass substrate 1 is sprayed with steam for formation of a film thereon. For example, the glass substrate 1 is conveyed on a mesh belt into a heating furnace, and film-forming raw materials are sprayed onto the glass substrate 1 while passing the heating furnace, to cause a reaction on the surface of the glass substrate 1 so that the desired stacked layer 6, 9 or 25 is formed on the glass substrate 1.

In forming the stacked layer by the spraying method, in the case of using the solution spraying method, a solution containing a predetermined film-forming raw material is sprayed onto the glass substrate 1 heated to a high temperature, and in the case of using the dispersion spraying method, a dispersion is prepared in place of the above solution, by dispersing particles of a predetermined film-forming raw material into a solution or a solvent, and the prepared dispersion is sprayed onto the glass substrate 1 heated to a high temperature. Further, in the case of using the powder spraying method, a powder of a predetermined film-forming raw material is sprayed onto the glass substrate 1 heated to a high temperature.

A comparison between the CVD method and the spraying method showed that in the case of the spraying method, it is difficult to control droplets or powder to be sprayed, and it is also difficult to control reaction products and undecomposed products, so that evenness in the film thickness cannot be easily achieved and the resulting glass with the stacked layer formed thereon has large strain. Therefore, the CVD method is more preferable for manufacturing the stacked layer.

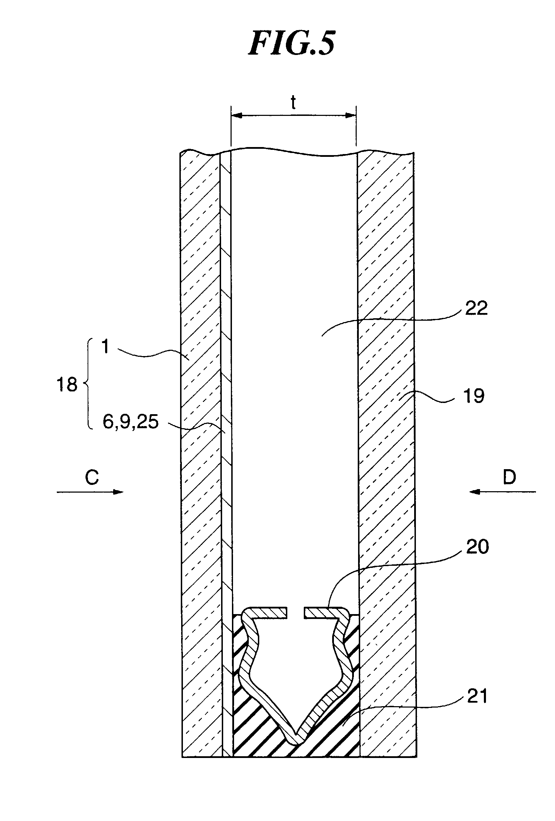

FIG. 5 is a cross-sectional view of an essential part of a double glazing unit as a glass article according to an embodiment of the present invention, which is formed of the low-E glass according to the present invention. The double glazing unit in FIG. 5 is comprised of the low-E glass 18 with the stacked layer 6, 9 or 25 formed thereon, a glass plate 19 formed of soda-lime silicate glass or the like, which is disposed in opposed relation to the low-E glass 18 in a fashion facing the stacked layer 6, 9 or 25, and a spacer 20 containing a drying agent interposed between the two members 18, 19 at respective end portions thereof. A sealing material 21 formed of butyl rubber or the like is filled in a gap between the above respective end portions of the members 18, 19 to seal the gap, and a hollow layer 22 is thereby defined and enclosed by the low-E glass 18, glass plate 19, spacer 20, and sealing material 21.

The hollow layer 22 may be filled with air or an inert gas such as argon gas. Further, to secure a sufficient heat insulating property, it is preferable that a thickness $t$ of the hollow layer 22, i.e. spacing between the low-E glass 18 and the glass plate 19, is limited to 5mm to 12mm.

It is generally recognized that double glazing of this kind can have an enhanced heat insulating property compared with a single glass plate. Further, the low-E glass according to the present invention has at least one of the two opposite major surfaces having a reflection color tone set such that the psychometric chroma coordinates a* and b* of the L*a*b* color system fall within the range of $25 \leqq a^{*2} + b^{*2} \leqq 900$, thereby allowing the adjustment of the color tone to a desired chromatic color tone, as well as reducing the color unevenness to improve its appearance.

That is, by adjusting the reflection color tone as viewed from outside the room such that the psychometric chroma coordinates a* and b* fall within the range of $25 \leqq a^{*2} + b^{*2} \leqq 900$, it is possible to obtain a double glazing unit with reduced color unevenness and a desired reflection color tone of a chromatic color.

In addition, by setting the reflection color tone as viewed from outside the room such that the psychometric chroma coordinates a* and b* satisfy the relationship of $-a^* \geqq b^*$ and $a^* \leqq b^*$, it is possible to obtain a double glazing unit having a beautiful reflection color tone of a green color, and by setting the reflection color tone as viewed from outside the room such that the psychometric chroma coordinates a* and b* satisfy the relationship of $a^* \geqq b^*$ and $-a^* \leqq b^*$, it is possible to obtain a double glazing unit having a beautiful reflection color tone of a blue color. Thus, a double glazing unit can be provided, which can have a more creative design or a wider variety of designs that can meet the needs of today's market.

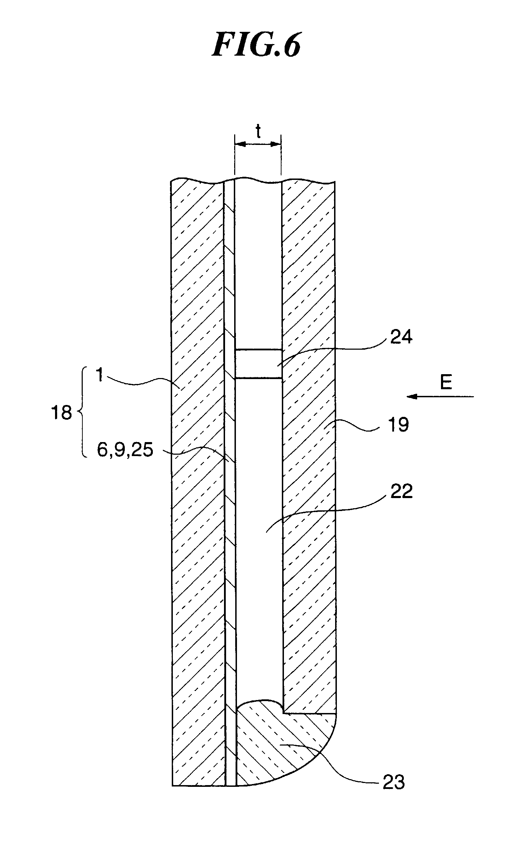

FIG. 6 is a cross-sectional view of an essential part of a double glazing unit according to another embodiment of the present invention. The double glazing unit in FIG. 6 is configured such that the stacked layer 6, 9 or 25 is disposed in opposed relation to the glass plate 19, with a hollow layer 22 having a thickness t of 0.2 mm to 1mm under a reduced pressure of $1 \times 10^{-2}$ Torr to $1 \times 10^{-4}$ Torr ($1.33$ Pa to $1.33 \times 10^{-2}$ Pa) defined therebetween, a low-melting point glass member 23 seals a gap between respective end portions of the members 6, 9 or 25 and 19, and spacers 24 are arranged at suitable positions within the hollow layer 22 so as to adjust the spacing between the low-E glass 18 and the glass plate 19.

Even by thus employing a reduced pressure layer as the hollow layer 22, similarly to the Fig. 5 embodiment, it is possible to obtain a double glazing unit which has an excellent design that can meet the needs of today's market.

EXAMPLES

Next, examples of the present invention will be explained.

A float plate glass which is 10cm in length, 10cm in width, and 3mm in thickness was cleaned and dried, and the float plate glass was used as the glass substrate 1, on which the stacked layer 6 was deposited by the CVD method. More specifically, the glass substrate 1 was conveyed by an open-to-air type mesh belt into a heating furnace heated to approximately 600 °C, and predetermined film-forming raw materials were supplied onto the glass substrate 1 while the glass substrate 1 passed the heating furnace to cause chemical reactions on the glass substrate 1 to cause precipitation of solid phases, thereby sequentially depositing the film 2, film 3, and film 4. In this way, test pieces of a film structure of glass substrate 1/$SnO_2$ film 2/$SiO_2$ film 3/$SnO_2$: F film 4, as shown in FIG. 1, and having different film thickness values, were prepared as Examples Nos. 1 - 4.

Specifically, as a tin raw material, monobutyltin trichloride (hereinafter referred to as "MBTC") was used. Steam of MBTC, oxygen ($O_2$), and nitrogen ($N_2$) were blended in such proportions that the mole ratio of MBTC, $O_2$, and $N_2$ was MBTC:$O_2$:$N_2$ = 1:4:6, into a raw material gas. The obtained raw material gas was supplied onto the glass substrate 1 to deposit the $SnO_2$ film 2 as a first layer on the glass substrate 1. Then, as a silicon raw material, monosilane ($SiH_4$) was used with addition of ethylene ($C_2H_4$) as unsaturated hydrocarbon. Monosilane, oxygen, nitrogen, and ethylene were blended in such proportions that the mole ratio of $SiH_4$, $O_2$, $N_2$, and $C_2H_4$ was $SiH_4$:$O_2$:$N_2$:$C_2H_4$ = 1:4:200:6, into a raw material gas. The obtained raw material gas was supplied onto the $SnO_2$ film 2 to deposit the $SiO_2$ film 3 as a second layer. Then, as a tin raw material, MBTC was used, and as a fluorine compound, hydrogen fluoride (HF) was used, and steam of MBTC, oxygen, nitrogen, and steam of hydrogen fluoride were blended in such proportions that the mole ratio of MBTC, $O_2$, $N_2$ and HF was MTBC:$O_2$:$N_2$:HF=4:4:6:1, into a raw material gas. The obtained raw material gas was supplied onto the $SiO_2$ film 3 to deposit the $SnO_2$:F film 4 as a third layer. The $SnO_2$:F film 4 had the fluorine content of 0.5 wt%.

Next, by the same CVD method as employed above, the present inventors prepared a test piece (Example No. 5) having a film structure of glass substrate 1/$Si_xSn_yO_z$ film 7/$SnO_2$:F film 4, as shown in FIG. 2.

That is, a float plate glass which is 10cm in length, 10cm in width, 3mm in thickness and having a refraction index $n_g$ of 1.5 (wavelength: 550nm) was cleaned and dried, and the float plate glass was used as the glass substrate 1. Then, the glass substrate 1 was conveyed by the open-to-air type mesh belt into the heating furnace heated to approximately 600°C, and predetermined film-forming raw materials were supplied onto the glass substrate 1 while the glass substrate 1 passed the heating furnace to cause chemical reactions on the glass substrate 1 to cause precipitation of solid phases, thereby sequentially depositing the $Si_xSn_yO_z$ film 7 and $SnO_2$:F film 4 on the glass substrate 1.

Specifically, as a silicon raw material, tetraethylorthosilicate (hereinafter referred to as "TEOS") was used, and as a tin raw material, MBTC was used. Steam of TEOS, steam of MBTC, oxygen, and nitrogen were blended in such proportions that the mole ratio of TEOS, MBTC, $O_2$, and $N_2$ was TEOS:MBTC:$O_2$:$N_2$ = 1:1:4:6, into a raw material gas. The obtained raw material gas was supplied onto the glass substrate 1 to deposit the Si$x$Sn$y$Oz film 7 having a film thickness of 48nm as the intermediate layer, as a first layer. The refractive index $n_1$ of the deposited Si$x$Sn$y$Oz film 7 was 1.7 at a wavelength of 550nm.

Then, as a tin raw material, MBTC was used, and as a fluorine compound, hydrogen fluoride (HF) was used. Steam of MBTC, oxygen, nitrogen, and steam of hydrogen fluoride were blended in such proportions that the mole ratio of MTBC, $O_2$, $N_2$ and HF was MTBC:$O_2$:$N_2$:HF=4:4:6:1, into a raw material gas. The obtained raw material gas was supplied onto the Si$x$Sn$y$Oz film 7 to deposit the SnO$_2$:F film 4 as a second layer. The refractive index $n_2$ of the deposited SnO$_2$:F film 4 was 1.9 at the wavelength of 550nm.

In this manner, a test piece (Example No. 5) having the intermediate layer 7 with a refractive index $n_1$ which satisfies the relationship of $n_g < n_1 < n_2$ was prepared, where $n_g$ and $n_2$ are the refractive indices of the glass substrate 1 and the SnO$_2$:F film 4, respectively, at the wavelength of 550nm. Similarly to Examples Nos. 1 to 4, the fluorine content in the SnO$_2$:F film 4 was 0.5 wt%.

Further, by the same CVD method as employed above, the present inventors prepared a test piece (Example No. 6) having a film structure of glass substrate 1/SnO$_2$ film 2/SiO$_2$ film 3/SnSbO$_x$ film 8/SnO$_2$:F film 4, as shown in FIG. 3.

That is, a float plate glass which is 10cm in length, 10cm in width, 3mm in thickness and having a refraction index $n_g$ of 1.5 (wavelength: 550nm) was cleaned and dried, and the float plate glass was used as the glass substrate 1. Then, the glass substrate 1 was conveyed by the open-to-air type mesh belt into the heating furnace heated to approximately 600°C, and predetermined film-forming raw materials were supplied onto the glass substrate 1 while the glass substrate 1 passed the heating furnace to cause chemical reactions on the glass substrate 1 to cause precipitation of solid phases, thereby sequentially depositing the SnO$_2$ film 2, SiO$_2$ film 3, SnSbO$_x$ film 8, and SnO$_2$:F film 4 on the glass substrate 1.

Specifically, as a tin raw material, MBTC was used, and steam of MBTC, oxygen and nitrogen were blended in such proportions that the mole ratio of MBTC, $O_2$, $N_2$ was MBTC:$O_2$:$N_2$ = 1:4:6, into a raw material gas. The obtained raw material gas was supplied onto the glass substrate 1 to deposit the SnO$_2$ film 2 as a first layer on the glass substrate 1. Then, as a silicon raw material, monosilane (SiH$_4$) was used together with ethylene (C$_2$H$_4$) as unsaturated hydrocarbon. Monosilane, oxygen, nitrogen, and ethylene were blended in such proportions that the mole ratio of SiH$_4$, $O_2$, $N_2$, and C$_2$H$_4$ was SiH$_4$:$O_2$:$N_2$:C$_2$H$_4$ = 1:4:200:6. The obtained raw material gas was supplied onto the SnO$_2$ film 2 to deposit the SiO$_2$ film 3 as a second layer. Then, as a tin raw material, MBTC was used, and as an antimony compound, antimony trichloride (SbCl$_3$) was used. Steam of MBTC, oxygen, nitrogen, and steam of antimony trichloride were blended in such proportions that the mole ratio of MTBC, $O_2$, $N_2$, and SbCl$_3$ was MTBC:$O_2$:$N_2$:SbCl$_3$=4:6:15:1, into a raw material gas. The obtained raw material gas was supplied onto the SiO$_2$ film 3 to deposit the SnSbOx film 8 as a third layer. The antimony content in the SnSbOx film 8 was such that the mole ratio of Sn/Sb was 0.06. Then, as a tin raw material, MBTC was used, and as a fluorine compound, hydrogen fluoride (HF) was used. Steam of MBTC, oxygen, nitrogen, and hydrogen fluoride were blended in such proportions that the mole ratio of MTBC, $O_2$, $N_2$, and HF was MTBC:$O_2$:$N_2$:HF=4:4:6:1, into a raw material gas. The obtained raw material gas was supplied onto the SnSbOx film 8 to deposit the SnO$_2$:F film 4 as a fourth layer. The fluorine content in the SnO$_2$:F film 4 was 0.5 wt%.

Further, a low-E glass having the same film structure as that of Example No. 6 but differing only in film thickness was prepared by the same method as employed in the preparation of Example No. 6, as Example No. 7. The thickness of each film was set as follows: SnO$_2$ film 2 (first layer): 28nm; SiO$_2$ film 3 (second layer): 24nm; SnSbO$_x$ film 8 (third layer): 72nm; and SnO$_2$:F film 4 (fourth layer): 396nm.

Next, by the same CVD method as employed above, the present inventors prepared Comparative Examples Nos. 1 - 4 having a film structure of glass substrate 1/SnO$_2$:F film and having different thickness values of the SnO$_2$:F film.

Specifically, as a tin raw material, MBTC was used, and as a fluorine compound, hydrogen fluoride (HF) was used. Steam of MBTC, oxygen, nitrogen, and steam of hydrogen fluoride were blended in such proportions that the mole ratio of MBTC, $O_2$, $N_2$, and HF was MBTC:$O_2$:$N_2$:HF=4:4:6:1, into a raw material gas. The obtained raw material gas was supplied onto the glass substrate 1 to deposit the SnO$_2$:F film on the glass substrate 1, to thereby prepare test pieces as Comparative Examples Nos. 1 - 4 having different film thickness values.

The thus obtained test pieces (Examples Nos. 1 to 5 and Comparative Examples Nos. 1 to 4) were measured according to JIS R3106-1998 for visible light transmittance and JIS Z8722-1994 for reflection color, respectively. Further, the psychometric chroma coordinates a* and b* of the L*a*b* color system were calculated according to JIS Z8729-1994.

To measure the visible light transmittance and reflection color, a spectrophotometer Model 330 manufactured by Hitachi, Ltd. was used.

Table 1 shows the measurement results of the examples and the comparative examples.

TABLE 1

| | | | FILM KIND | FILM THICK-NESS (nm) | REFRAC-TIVE INDEX (−) | VISIBLE LIGHT TRANSMIT-TANCE (%) | REFLECTION COLOR TONE OF FILM COATED SURFACE | | | | REFECTION COLOR TONE OF NON-FILM COATED SURFACE | | | |
|---|---|---|---|---|---|---|---|---|---|---|---|---|---|---|
| | | | | | | | a* | b* | COLOR TONE | UNEVENESS OF COLOR | a* | b* | COLOR TONE | UNEVENESS OF COLOR |
| EXAMPLES ACCORDING TO PRESENT INVENTION | 1 | 1st LAYER | $SnO_2$ | 62 | − | 82.0 | -9.8 | 2.7 | GREEN | ○ | -10.1 | 2.9 | GREEN | ○ |
| | | 2nd LAYER | $SiO_2$ | 14 | − | | | | | | | | | |
| | | 3rd LAYER | $SnO_2{:}F$ | 380 | − | | | | | | | | | |
| | 2 | 1st LAYER | $SnO_2$ | 14 | − | 84.8 | 3.6 | -11.1 | BLUE | ○ | 3.8 | -10.9 | BLUE | ○ |
| | | 2nd LAYER | $SiO_2$ | 34 | − | | | | | | | | | |
| | | 3rd LAYER | $SnO_2{:}F$ | 290 | − | | | | | | | | | |
| | 3 | 1st LAYER | $SnO_2$ | 14 | − | 82.6 | 10.9 | -4.2 | RED | ○ | 10.4 | -4.0 | RED | ○ |
| | | 2nd LAYER | $SiO_2$ | 22 | − | | | | | | | | | |
| | | 3rd LAYER | $SnO_2{:}F$ | 400 | − | | | | | | | | | |
| | 4 | 1st LAYER | $SnO_2$ | 26 | − | 83.5 | -2.3 | 8.3 | YELLOW | ○ | -2.9 | 8.4 | YELLOW | ○ |
| | | 2nd LAYER | $SiO_2$ | 28 | − | | | | | | | | | |
| | | 3rd LAYER | $SnO_2{:}F$ | 230 | − | | | | | | | | | |
| | 5 | 1st LAYER | SixSnyOz | 48 | 1.7 | 82.9 | -13.8 | 4.5 | GREEN | ○ | -13.0 | 4.3 | GREEN | ○ |
| | | 2nd LAYER | $SnO_2{:}F$ | 300 | 1.9 | | | | | | | | | |
| | 6 | 1st LAYER | $SnO_2$ | 28 | − | 77.6 | 0.8 | 2.0 | NEUTRAL | ○ | -7.5 | 3.2 | GREEN | ○ |
| | | 2nd LAYER | $SiO_2$ | 28 | − | | | | | | | | | |
| | | 3rd LAYER | SnSbOx | 70 | − | | | | | | | | | |
| | | 4th LAYER | $SnO_2{:}F$ | 320 | − | | | | | | | | | |
| | 7 | 1st LAYER | $SnO_2$ | 28 | − | 77.5 | -6.9 | -1.0 | GREEN | ○ | 2.0 | 0.5 | NEUTRAL | ○ |
| | | 2nd LAYER | $SiO_2$ | 24 | − | | | | | | | | | |
| | | 3rd LAYER | SnSbOx | 72 | − | | | | | | | | | |
| | | 4th LAYER | $SnO_2{:}F$ | 396 | − | | | | | | | | | |
| COMPARATIVE EXAMPLES | 1 | | $SnO_2{:}F$ | 310 | − | 83.0 | -19.1 | 2.1 | GREEN | × | -18.4 | 1.8 | GREEN | × |
| | 2 | | $SnO_2{:}F$ | 290 | − | 84.6 | 0.7 | -12.7 | BLUE | × | 0.9 | -12.5 | BLUE | × |
| | 3 | | $SnO_2{:}F$ | 240 | − | 82.9 | 12.2 | 4.1 | RED | × | 11.2 | 4.3 | RED | × |
| | 4 | | $SnO_2{:}F$ | 220 | − | 80.8 | -3.3 | 20.3 | YELLOW | × | -3.9 | 19.8 | YELLOW | × |

Comparative Examples Nos. 1 to 4 all have visible light transmittance values over 70% providing required transparency, and further, can have reflection color tones of various chromatic colors by adjusting the thickness of the $SnO_2{:}F$ film. However, because only the $SnO_2{:}F$ film is deposited on the glass substrate, the interference color changes drastically for a change in the film thickness, resulting in a conspicuous color unevenness and thereby damaging the appearance of the glass.

On the other hand, Examples Nos. 1 to 4, in which the thickness of each film was set within the range described with reference to the first embodiment, can provide a low-E glass having a desired reflection color tone and reduced color unevenness and hence having an excellent design. Further, Examples Nos. 1 to 4 all have visible light transmittance of 70% or more, providing excellent transparency.

Specifically, in Example No. 1, the thickness of each film was adjusted as follows: $SnO_2$ film 2: 62nm; $SiO_2$ film 3: 14nm; and $SnO_2{:}F$ film 4: 380nm. As a result, the psychometric chroma coordinates a* and b* as viewed from the surface on which the low emissivity film is deposited (hereinafter referred to as the "film-coated surface") are -9.8 and 2.7, respectively, and the psychometric chroma coordinates a* and b* as viewed from the non-film-coated surface are -10.1 and 2.9, respectively, so that a reflection color tone of a green color is obtained, thereby achieving a low-E glass having a green reflection color tone with excellent transparency, as well as reduced color unevenness.

In Example No. 2, the thickness of each film was adjusted as follows: $SnO_2$ film 2: 14nm; $SiO_2$ film 3: 34nm; and $SnO_2{:}F$ film 4: 290nm. As a result, the psychometric chroma coordinates a* and b* as viewed from the film-coated surface are 3.6 and -11.1, respectively, and the psychometric chroma coordinates a* and b* as viewed from the non-film-coated surface are 3.8 and - 10.9, respectively, so that a reflection color tone of a blue color is obtained, thereby achieving a low-E glass having a blue reflection color tone with excellent transparency, as well as reduced color unevenness.

In Example No. 3, the thickness of each film was adjusted as follows: $SnO_2$ film 2: 14nm; $SiO_2$ film 3: 22nm; and $SnO_2$:F film 4: 400nm. As a result, the psychometric chroma coordinates a* and b* as viewed from the film-coated surface are 10.9 and -4.2, respectively, and the psychometric chroma coordinates a* and b* as viewed from the non-film-coated surface are 10.4 and - 4.0, respectively, so that a reflection color tone of a red color is obtained, thereby achieving a low-E glass having a red reflection color tone with excellent transparency, as well as reduced color unevenness.

In Example No. 4, the thickness of each film was adjusted as follows: $SnO_2$ film 2: 26nm; $SiO_2$ film 3: 28nm; $SnO_2$:F film 4: 230nm. As a result, the psychometric chroma coordinates a* and b* as viewed from the film-coated surface are -2.3 and 8.3, respectively, and the psychometric chroma coordinates a* and b* as viewed from the non-film-coated surface are -2.9 and 8.4, respectively, so that a reflection color tone of a yellow color is obtained, thereby achieving a low-E glass having a yellow reflection color tone with excellent transparency, as well as reduced color unevenness.

That is, Examples Nos. 1 to 4 clearly show that by adjusting the thickness of the intermediate layer 5 ($SnO_2$ film 2 and $SiO_2$ film 3) within a predetermined range, the color unevenness decreases and the appearance of the glass is improved. Therefore, by controlling the film thickness of the intermediate layer 5 and the low emissivity film, i.e. $SnO_2$:F film 4, it is possible to obtain a low-E glass having an excellent design with a desired chromatic color tone without spoiling the transparency.

In Example No. 5, since the refractive index $n_1$ (=1.7) of the Si$x$Sn$y$Oz film 7, which constitutes the intermediate layer, is a median value between the refractive index of the glass substrate, $n_g$ (=1.5), and the refractive index of the $SnO_2$:F film 4, $n_2$ (=1.9), and the thickness of the Si$x$Sn$y$Oz film 7 is 48nm, thus within the range of 10nm to 100nm, it is possible to achieve a low-E glass having an excellent design with reduced color unevenness. By adjusting the thickness of the Si$x$Sn$y$Oz film 7 to 48nm and the $SnO_2$:F film 4 to 300nm, the psychometric chroma coordinates a* and b* as viewed from the film-coated surface are -13.8 and 4.5, respectively, and the psychometric chroma coordinates a* and b* as viewed from the non-film-coated surface are - 13.0 and 4.3, respectively, thereby achieving a low-E glass having a green reflection color tone with excellent transparency, as well as an excellent design due to the reduced color unevenness.

In Example No. 6, the thickness of each film was adjusted as follows: $SnO_2$ film 2 and $SiO_2$ film 3: 28nm; SnSbOx film 8: 70nm; and $SnO_2$:F film 4: 320nm. As a result, the psychometric chroma coordinates a* and b* as viewed from the film-coated surface are 0.8 and 2.0, respectively, so that a reflection color tone of a neutral color is obtained. On the other hand, the psychometric chroma coordinates a* and b* as viewed from the non-film-coated surface are -7.5 and 3.2, respectively, obtaining a reflection color tone of a green color tone. Therefore, a low-E glass showing a natural and neutral reflection color tone when viewed from the film-coated surface while showing a green reflection color tone when viewed from the non-film-coated surface is provided, enhancing the design of the glass. In addition, the glass has a visible light transmittance of 70% or more and provides excellent transparency and reduced color unevenness.

In Example No. 7 the thickness of each film was adjusted as follows: $SnO_2$ film 2: 28nm; $SiO_2$ film 3: 24nm; SnSbOx film 8: 72nm, and $SnO_2$:F film 4: 396nm. As a result, the psychometric chroma coordinates a* and b* as viewed from the film-coated surface are -6.86 and -1.04, respectively, so that a reflection color tone of a green color is obtained. On the other hand, the psychometric chroma coordinates a* and b* as viewed from the non-film-coated surface are 1.95 and 0.49, respectively, so that a reflection color tone of a neutral color is obtained. Therefore, a low-E glass is provided, which shows a green reflection color tone when viewed from the film-coated surface, and has an excellent design, while showing a neutral reflection color tone when viewed from the non-film-coated surface. In addition, the glass has a visible light transmittance of 70% or more, and similarly to Example 6, provides excellent transparency and reduced color unevenness.

Therefore, it is clearly shown from Examples Nos. 6 and 7 that when the SnSbOx film 8 is included in the intermediate layer 10, it is possible for at least one of the two opposite major surfaces of the glass substrate 1 to have a reflection color tone of a chromatic color, while the remaining surface has a reflection color of a neutral color, by adjusting the film thickness of the other stacked layers. In this manner, a low-E glass providing the possibility of a more creative design or a wider variety or designs with reduced color unevenness while having a natural reflection color tone and excellent transparency can be obtained.

Next, the present inventors prepared three different types of double glazing units using the test pieces of Example No. 1 and Comparative Example No. 1.

That is, the test piece of Example No. 1 and the glass plate 19 (float glass plate) formed of soda-lime silicate glass were used to prepare double glazing units as Examples Nos. 11 to 13. The test piece was disposed in such a manner that the film-coated surface of the test piece faces the hollow layer 22. The double glazing units as Examples Nos. 11 and 12 had a configuration as shown in FIG. 5, but the hollow layer 22 was filled with air and argon gas as an inert gas, respectively. The double glazing unit as Example No. 13 had a configuration as shown in FIG. 6 and the pressure of the hollow layer 22 was reduced to 1 x 10$^{-4}$ Torr (1.33 x 10$^{-2}$ Pa).

Then, the test piece of Comparative Example No. 1 and the glass plate 19 (float glass plate) formed of soda-lime silicate glass were used to prepare double glazing units as Comparative Examples Nos. 11 to 13. The test piece was disposed in such a manner that the film-coated surface of the test piece faces the hollow layer 22. The double glazing units as Comparative Examples Nos. 11 and 12 had a configuration as shown in FIG.5, but the hollow layer 22 was filled with air and argon gas as an inert gas, respectively. The double glazing unit as Comparative Example No. 13 had a configuration as shown in FIG.6 and the pressure of the hollow layer 22 was reduced to 1 x 10$^{-4}$ Torr (1.33 x 10$^{-2}$ Pa).

The thickness $t$ of the hollow layer 22 was set to 6mm in Examples Nos. 11 and 12, and Comparative Examples Nos. 11 and 12, and to 0.3 mm in Example No. 13 and Comparative Example No. 13.

Then, the double glazing units as Example No. 11 and Comparative Example No. 11 were disposed with the low-E glass 18 facing outside the room, and the reflection colors of Example No. 11 and Comparative Example No. 11 as viewed from outside the room (in a direction as indicated by an arrow C in FIG. 5) were measured according to JIS Z8722-1994. The measurement results were then used to calculate the psychometric chroma coordinates a* and b* of the L*a*b* color system according to JIS Z8729-1994. In a similar manner, the double glazing units as Examples No. 12 and 13, and Comparative Examples Nos. 12 and 13 were disposed with the low-E glass 18 facing inward of the room, and the reflection colors of Examples No. 12 and 13, and Comparative Examples Nos. 12 and 13 as viewed from outside the room (in directions as indicated by an arrow D and in FIG. 5 and an arrow E in FIG. 6, respectively) were measured, the results of which were used to calculate the psychometric chroma coordinates a* and b* of the L*a*b* color system.

The measurement of the reflection color tone was carried out using the spectrophotometer Model 330 manufactured by Hitachi, Ltd., similarly to the measurement of the single glass plate.

Table 2 shows the measurement results of Examples Nos. 11 to 13 and Comparative Examples Nos. 11 to 13.

TABLE 2

| | | | REFLECTION COLOR TONE WHEN VIEWED FROM OUTSIDE THE ROOM | | | |
|---|---|---|---|---|---|---|
| | | | a* | b* | COLOR TONE | UNEVENESS OF COLOR |
| EXAMPLES ACCORDING TO PRESENT INVENTION | | 11 | −7.8 | 2.8 | GREEN | ○ |
| | | 12 | −7.2 | 1.8 | GREEN | ○ |
| | | 13 | −7.2 | 1.8 | GREEN | ○ |
| COMPARATIVE EXAMPLES | | 11 | −12.6 | 1.4 | GREEN | × |
| | | 12 | −12.2 | 1.0 | GREEN | × |
| | | 13 | −12.2 | 1.0 | GREEN | × |

As is learned from Table 2, Comparative Examples Nos. 11 to 13 had occurrence of color unevenness since the conspicuous color unevenness of the test piece of Comparative Example No. 1 still remained without being reduced even when the same test piece was employed in the double glazing units. As a result, the appearance of the double glazing unit was damaged.

In contrast, Examples Nos. 11 to 13 had reduced color unevenness since the test piece of Example No. 1 had reduced color unevenness, that is, the color unevenness was reduced even when the test piece was employed in the double glazing units. As a result, a double glazing unit having an excellent design with a green reflection color tone when viewed from outside the room can be obtained. Still further, by employing the low-E glass according to the present invention in a double glazing unit, a further enhanced heat insulating property can be achieved.

**Claims**

1. A low emissivity glass comprising:

   a glass substrate having a surface;
   at least one low emissivity film formed on the surface of said glass substrate; and
   at least one intermediate layer interposed between said glass substrate and said low emissivity film, for suppressing a change of an interference color caused by a change of film thickness of said low emissivity film; wherein said low emissivity glass has a visible light transmittance of 70 % or more, and said low emissivity glass has two opposite major surfaces and has a reflection color tone as viewed from at least one surface of said two opposite major surfaces set such that psychometric chroma coordinates a* and b* of the L*a*b* color system are within a range of $25 \leqq a^{*2}+b^{*2} \leqq 900$.

2. A low emissivity glass as claimed in claim 1, wherein said intermediate layer comprises a tin oxide based film comprising a tin oxide, and a silicon oxide based film comprising a silicon oxide formed on a surface of said tin oxide based film.

3. A low emissivity glass as claimed in claim 2, wherein said tin oxide based film and said silicon oxide based film each have a thickness in a range of 10nm to 100nm.

4. A low emissivity glass as claimed in claim 1, wherein said intermediate layer has a refractive index $n_1$ satisfying a relationship of $n_g<n_1<n_2$ at a wavelength of 550nm, where $n_g$ is a refractive index of said glass substrate, and $n_2$ is a refractive index of said low emissivity film.

5. A low emissivity glass as claimed in claim 4, wherein said intermediate layer comprises a film of an alloy compound containing a silicon oxide and a tin oxide which satisfies a general equation of SixSnyOz ($0<x<1$, $0<y<1$, $0<z \leqq 2$, $x+y \leqq 1$).

6. A low emissivity glass as claimed in claim 4, wherein said intermediate layer comprises a film of an alloy compound containing a silicon carbide and a silicon oxide, which satisfies a general equation of SiCxOy ($0<x<1$, $0<y<2$, $2x+y \leqq 2$).

7. A low emissivity glass as claimed in claim 5 or 6, wherein said film of the alloy compound has a thickness in a range of 10nm to 100nm.

8. A low emissivity glass as claimed in claim 1 or 4, wherein said low emissivity film comprises a tin oxide based film comprising a tin oxide doped with fluorine.

9. A low emissivity glass as claimed in claim 8, wherein said tin oxide based film comprising a tin oxide doped with fluorine has a thickness in a range of 200 to 500nm.

10. A low emissivity glass as claimed in claim 9, wherein a fluorine content of said tin oxide based film is in a range of 0.01 to 1 wt%.

11. A low emissivity glass as claimed in claim 1, wherein the reflection color tone is set such that the psychometric chroma coordinates a* and b* satisfy a relationship of $-a^* \geqq b^*$ and $a^* \leqq b^*$.

12. A low emissivity glass as claimed in claim 11, wherein said intermediate layer comprises a tin oxide based film comprising a tin oxide, and a silicon oxide based film comprising a silicon oxide formed on a surface of said tin oxide based film, and

wherein said tin oxide based film has a thickness in a range of 1 Onm to 100nm, and said silicon oxide based film has a thickness in a range of 10nm to 50nm, and

wherein said low emissivity film comprises a tin oxide based film comprising a tin oxide doped with fluorine and has a thickness in a range of 300 to 500nm.

13. A low emissivity glass as claimed in claim 1, wherein the reflection color tone is set such that the psychometric chroma coordinates a* and b* satisfy a relationship of $a^* \geqq b^*$ and $-a^* \geqq b^*$.

14. A low emissivity glass as claimed in claim 13, wherein said intermediate layer comprises a tin oxide based film comprising a tin oxide, and a silicon oxide based film comprising a silicon oxide formed on a surface of said tin oxide based film,

wherein said tin oxide based film has a thickness in a range of 10nm to 100nm, and said silicon oxide based film has a thickness in a range of 10 to 100nm, and

wherein said low emissivity film comprises a tin oxide based film comprising a tin oxide doped with fluorine and has a thickness in a range of 250 to 450nm.

15. A low emissivity glass as claimed in claim 1, wherein the reflection color tone as viewed from one surface of said two opposite major surfaces is set such that the psychometric chroma coordinates a* and b* are within a range of $25 \leqq a^{*2} + b^{*2} \leqq 900$ and the reflection color tone as viewed from another surface of said two opposite major surfaces is set such that the psychometric chroma coordinates a* and b* satisfy a relationship of $25 > a^{*2} + b^{*2}$.

16. A low emissivity glass as claimed in claim 15, wherein said intermediate layer comprises at least one tin oxide based film comprising a tin oxide doped with antimony.

17. A low emissivity glass as claimed in claim 16, wherein said at least one tin oxide based film comprising a tin oxide doped with antimony has a thickness in a range of 10 to 250nm.

18. A low emissivity glass as claimed in claim 17, wherein an antimony content of said tin oxide based film is in a range of 0.01 to 0.2 in terms of antimony to tin (Sb/Sn) mole ratio.

19. A low emissivity glass as claimed in claim 15, wherein said low emissivity film comprises a tin oxide based film comprising a tin oxide doped with fluorine.

20. A low emissivity glass as claimed in claim 19, wherein said tin oxide based film comprising a tin oxide doped with fluorine has a thickness in a range of 200 to 500nm.

21. A low emissivity glass as claimed in claim 20, wherein a fluorine content of said tin oxide based film is in a range of 0.01 to 1 wt%.

22. A glass article comprising:

a plurality of glass plates including at least one glass plate of a low emissivity glass as claimed in any of claims 1 to 21, said glass plates being disposed in opposed relation to each other with a hollow layer defined therebetween; and

wherein the glass article has a reflection color tone as viewed from outside a room set such that the psychometric chroma coordinates a* and b* of the L*a*b* color system are within a range of $25 \leqq a^{*2} + b^{*2} \leqq 900$.

23. A glass article as claimed in claim 22 wherein the reflection color tone as viewed from outside the room is set such that the psychometric chroma coordinates a* and b* satisfy a relationship of $-a^* \geqq b^*$ and $a^* \leqq b^*$.

24. A glass article as claimed in claim 22, wherein the reflection color tone as viewed from outside the room is set such that the psychometric chroma coordinates a* and b* satisfy a relationship of $a^* \geqq b^*$ and $-a^* \geqq b^*$.

25. A method of manufacturing a low emissivity glass, comprising the steps of:

preparing a glass substrate having a surface;

forming at least one low emissivity film on the surface of said glass substrate; and

interposing at least one intermediate layer between said glass substrate and said low emissivity film; wherein said low emissivity glass has a visible light transmittance of 70 % or more, and said low emissivity glass has two opposite major surfaces and has a reflection color tone as viewed from at least one surface of said two opposite major surfaces set such that the psychometric chroma coordinates a* and b* of the L*a*b* color system are within a range of $25 \leqq a^{*2} + b^{*2} \leqq 900$.

*FIG.1*

*FIG.2*

*FIG.3*

*FIG.4*

GLASS RAW MATERIAL

11

12

A

14

15

16a 16b 16c 16d

16

17

B

13

15

# *FIG.5*

# FIG.6

# EP 1 053 980 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 0 983 972 A (ATOCHEM NORTH AMERICA ELF) 8 March 2000 (2000-03-08) * the whole document * --- | 1,11,13, 15-25 | C03C17/34 |
| X | US 5 332 888 A (TAUSCH PETER J ET AL) 26 July 1994 (1994-07-26) * column 4, line 4 - line 55 * * examples III,IV * --- | 1,11,15, 22-25 | |
| X | US 5 780 149 A (MCCURDY RICHARD J ET AL) 14 July 1998 (1998-07-14) <br><br> * column 1, line 22 - line 28 * * column 4, line 25 - line 35 * * column 7, line 65 - column 8, line 15 * Predictive Example I * claims 2,18 * --- | 1-4, 11-15, 22-25 | |
| X | EP 0 526 966 A (FORD MOTOR CO ;FORD FRANCE (FR); FORD WERKE AG (DE); FORD MOTOR CO) 10 February 1993 (1993-02-10) * page 2, line 37 - line 40 * * example 1 * --- | 1-4,6 | **TECHNICAL FIELDS SEARCHED** (Int.Cl.7) <br><br> C03C |
| X | US 5 776 603 A (CORINNE VICTOR ET AL) 7 July 1998 (1998-07-07) * column 1, line 21 - line 41 * * column 6, line 39 - line 67 * * column 7, line 48 - line 62 * * column 8, line 57 - column 9, line 12 * --- | 1,6-15, 22-25 | |
| X | US 5 520 996 A (BALIAN PIERRE ET AL) 28 May 1996 (1996-05-28) * column 6, line 20 - line 60 * * column 7, line 34 - line 42 * --- | 1,6-15, 22-25 | |
| | -/-- | | |

The present search report has been drawn up for all claims

| Place of search | Date of completion of the search | Examiner |
|---|---|---|
| MUNICH | 18 September 2000 | Somann, K |

**European Patent Office**

**EUROPEAN SEARCH REPORT**

Application Number

EP 00 40 1123

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 304 394 A (SAUVINET VINCENT M ET AL) 19 April 1994 (1994-04-19) <br> * column 5, line 28 - column 6, line 59 * <br> --- | 1,6-15, 22-25 | |
| X | GB 2 302 102 A (GLAVERBEL) 8 January 1997 (1997-01-08) <br> * page 7, line 30 - page 8, line 27 * <br> --- | 8-10, 16-21 | |
| X | STJEMA B ET AL: "Optical and electrical properties of radio frequency sputtered tin oxide films doped with oxygen vacancies, F, Sb, or Mo" <br> JOURNAL OF APPLIED PHYSICS,US,AMERICAN INSTITUTE OF PHYSICS. NEW YORK, <br> vol. 76, no. 6, <br> 15 September 1994 (1994-09-15), pages 3797-3817, XP002140560 <br> ISSN: 0021-8979 <br> * page 3799, right-hand column, paragraph 2 - paragraph 3 * <br> * page 3802, right-hand column, last paragraph - page 3803, left-hand column, paragraph 1 * <br> * page 3804, right-hand column, last paragraph - page 3805, left-hand column, paragraph 1 * <br> * page 3806, left-hand column, paragraph 2 * <br> * page 3807, right-hand column, paragraph 2 - page 3808, left-hand column, paragraph 1 * <br> * page 3814, right-hand column, last paragraph - page 3816, right-hand column, last paragraph * <br> * figures 6,7,9,10,12,13,26 * <br> * tables I-IV * <br> ----- | 8-10, 16-21 | **TECHNICAL FIELDS SEARCHED** (Int.Cl.7) |

The present search report has been drawn up for all claims

| Place of search | Date of completion of the search | Examiner |
|---|---|---|
| MUNICH | 18 September 2000 | Somann, K |

EPO FORM 1503 03.82 (P04C01)

**ANNEX TO THE EUROPEAN SEARCH REPORT
ON EUROPEAN PATENT APPLICATION NO.**      EP 00 40 1123

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2000

| Patent document cited in search report | | Publication date | Patent family member(s) | | Publication date |
|---|---|---|---|---|---|
| EP 0983972 | A | 08-03-2000 | AU | 4246399 A | 09-03-2000 |
| | | | JP | 2000103648 A | 11-04-2000 |
| | | | PL | 335017 A | 28-02-2000 |
| US 5332888 | A | 26-07-1994 | US | 4786784 A | 22-11-1988 |
| | | | US | 4943484 A | 24-07-1990 |
| | | | AU | 633263 B | 28-01-1993 |
| | | | AU | 3973089 A | 28-05-1990 |
| | | | BR | 8907164 A | 26-02-1991 |
| | | | CA | 1322683 A | 05-10-1993 |
| | | | CN | 1042529 A | 30-05-1990 |
| | | | DK | 158690 A | 02-07-1990 |
| | | | EP | 0413002 A | 20-02-1991 |
| | | | ES | 2010893 A | 01-12-1989 |
| | | | JP | 3503755 T | 22-08-1991 |
| | | | NO | 903055 A | 09-07-1990 |
| | | | WO | 9005439 A | 17-05-1990 |
| | | | ZA | 8901768 A | 29-11-1989 |
| | | | AU | 613353 B | 01-08-1991 |
| | | | AU | 1394288 A | 14-09-1988 |
| | | | BR | 8805402 A | 15-08-1989 |
| | | | CA | 1288460 A | 03-09-1991 |
| | | | CN | 88100933 A | 14-12-1988 |
| | | | DK | 573288 A | 14-10-1988 |
| | | | EP | 0309498 A | 05-04-1989 |
| | | | ES | 2009176 A | 01-09-1989 |
| | | | FI | 884638 A | 10-10-1988 |
| | | | JP | 1503050 T | 19-10-1989 |
| | | | NO | 884597 A | 14-10-1988 |
| | | | WO | 8806095 A | 25-08-1988 |
| | | | ZA | 8800935 A | 09-08-1988 |
| | | | AT | 81820 T | 15-11-1992 |
| | | | AU | 605189 B | 10-01-1991 |
| | | | AU | 7969787 A | 08-03-1988 |
| | | | BR | 8707429 A | 01-11-1988 |
| | | | CA | 1333044 A | 15-11-1994 |
| | | | DE | 3782417 A | 03-12-1992 |
| | | | DE | 3782417 D | 03-12-1992 |
| | | | DE | 3782417 T | 08-04-1993 |
| | | | EP | 0277228 A | 10-08-1988 |
| | | | ES | 2005263 A | 01-03-1989 |
| | | | JP | 1500653 T | 09-03-1989 |
| | | | KR | 9510579 B | 20-09-1995 |
| | | | MX | 164291 B | 30-07-1992 |
| | | | WO | 8801230 A | 25-02-1988 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 00 40 1123

18-09-2000

| Patent document cited in search report | | Publication date | Patent family member(s) | | Publication date |
|---|---|---|---|---|---|
| US 5780149 | A | 14-07-1998 | AU | 4260797 A | 02-04-1998 |
| | | | CA | 2235541 A | 19-03-1998 |
| | | | EP | 0885118 A | 23-12-1998 |
| | | | JP | 2000501693 T | 15-02-2000 |
| | | | WO | 9810922 A | 19-03-1998 |
| EP 0526966 | A | 10-02-1993 | US | 5168003 A | 01-12-1992 |
| | | | CA | 2068371 A,C | 25-12-1992 |
| | | | DE | 69211444 D | 18-07-1996 |
| | | | DE | 69211444 T | 24-10-1996 |
| | | | JP | 2510378 B | 26-06-1996 |
| | | | JP | 5193993 A | 03-08-1993 |
| | | | KR | 9610823 B | 09-08-1996 |
| | | | US | 5271960 A | 21-12-1993 |
| US 5776603 | A | 07-07-1998 | FR | 2727107 A | 24-05-1996 |
| | | | AT | 167658 T | 15-07-1998 |
| | | | CA | 2163154 A | 22-05-1996 |
| | | | CZ | 9503071 A | 14-08-1996 |
| | | | DE | 69503107 D | 30-07-1998 |
| | | | DE | 69503107 T | 11-03-1999 |
| | | | EP | 0712815 A | 22-05-1996 |
| | | | ES | 2120699 T | 01-11-1998 |
| | | | FI | 955581 A | 22-05-1996 |
| | | | JP | 8207204 A | 13-08-1996 |
| | | | NO | 954646 A | 22-05-1996 |
| | | | RO | 112719 A | 30-12-1997 |
| US 5520996 | A | 28-05-1996 | FR | 2704545 A | 04-11-1994 |
| | | | AT | 181546 T | 15-07-1999 |
| | | | BR | 9405295 A | 31-08-1999 |
| | | | CA | 2138798 A | 10-11-1994 |
| | | | CN | 1108862 A | 20-09-1995 |
| | | | CZ | 9403335 A | 16-08-1995 |
| | | | DE | 69419224 D | 29-07-1999 |
| | | | DE | 69419224 T | 17-02-2000 |
| | | | EP | 0648196 A | 19-04-1995 |
| | | | ES | 2135573 T | 01-11-1999 |
| | | | FI | 946122 A | 28-12-1994 |
| | | | WO | 9425410 A | 10-11-1994 |
| | | | JP | 7508491 T | 21-09-1995 |
| | | | NO | 944952 A | 20-12-1994 |
| | | | PL | 306833 A | 18-04-1995 |
| | | | RO | 114784 A | 30-07-1999 |
| | | | RU | 2127231 C | 10-03-1999 |
| | | | TR | 28354 A | 16-05-1996 |

EPO FORM P0459

## ANNEX TO THE EUROPEAN SEARCH REPORT
## ON EUROPEAN PATENT APPLICATION NO.

EP 00 40 1123

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2000

| Patent document cited in search report | | Publication date | Patent family member(s) | | Publication date |
|---|---|---|---|---|---|
| US 5304394 | A | 19-04-1994 | FR | 2677639 A | 18-12-1992 |
| | | | CA | 2071147 A | 15-12-1992 |
| | | | DE | 69228573 D | 15-04-1999 |
| | | | DE | 69228573 T | 11-11-1999 |
| | | | EP | 0518755 A | 16-12-1992 |
| | | | ES | 2131522 T | 01-08-1999 |
| | | | JP | 5208849 A | 20-08-1993 |
| GB 2302102 | A | 08-01-1997 | BE | 1010321 A | 02-06-1998 |
| | | | BE | 1010322 A | 02-06-1998 |
| | | | CA | 2178032 A | 10-12-1996 |
| | | | CA | 2178033 A | 10-12-1996 |
| | | | CZ | 9601678 A | 16-04-1997 |
| | | | CZ | 9601679 A | 16-04-1997 |
| | | | DE | 19622898 A | 12-12-1996 |
| | | | DE | 19622899 A | 12-12-1996 |
| | | | ES | 2126486 A | 16-03-1999 |
| | | | ES | 2126487 A | 16-03-1999 |
| | | | FR | 2735123 A | 13-12-1996 |
| | | | FR | 2735124 A | 13-12-1996 |
| | | | GB | 2302101 A,B | 08-01-1997 |
| | | | HU | 9601586 A | 30-06-1997 |
| | | | IT | TO960478 A | 04-12-1997 |
| | | | IT | TO960479 A | 04-12-1997 |
| | | | JP | 8337437 A | 24-12-1996 |
| | | | LU | 88767 A | 05-11-1996 |
| | | | NL | 1003294 C | 03-04-1997 |
| | | | NL | 1003294 A | 10-12-1996 |
| | | | PL | 314663 A | 23-12-1996 |
| | | | PL | 314664 A | 23-12-1996 |
| | | | PT | 101879 A,B | 28-02-1997 |
| | | | SE | 9602268 A | 10-12-1996 |
| | | | SE | 9602269 A | 10-12-1996 |
| | | | TR | 970189 A | 21-03-1997 |

EPO FORM P0459

For more details about this annex : see Official Journal of the European Patent Office, No. 12/82